Europäisches Patentamt

(19) European Patent Office

Office européen des brevets

(11) Publication number: **0 445 091 A1**

(12) **EUROPEAN PATENT APPLICATION**

(21) Application number: 91850013.3

(22) Date of filing: 23.01.91

(51) Int. Cl.⁵: **A61C 17/06**

(30) Priority: 27.02.90 FI 900995

(43) Date of publication of application:
04.09.91 Bulletin 91/36

(84) Designated Contracting States:
AT BE CH DE DK ES FR GB GR IT LI LU NL SE

(71) Applicant: **PLANMECA OY**
Asentajankatu 6
SF-00810 Helsinki (FI)

(72) Inventor: Hyvärinen, Pentti
Klaavuntie 5 E 40
SF-00910 Helsinki (FI)

(74) Representative: Onn, Thorsten et al
AB Stockholms Patentbyra Zacco & Bruhn
P.O. Box 3129
S-103 62 Stockholm (SE)

(54) Closing mechanism for the suction device of a dental care machine.

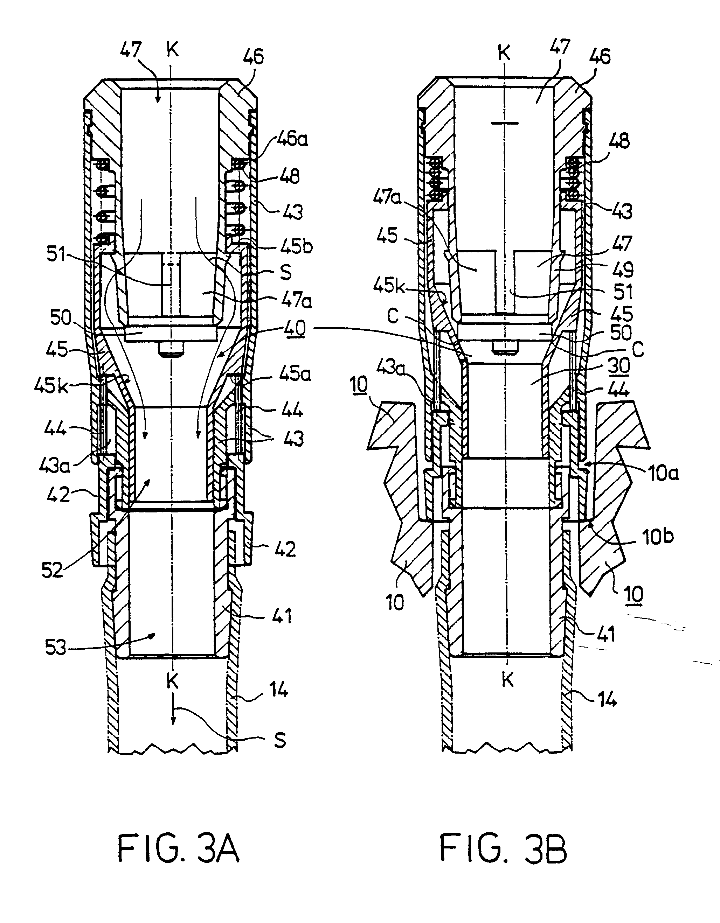

(57) Closing mechanism (40) for the suction device used in connection with a dentist's treatment machine, said mechanism being connected to the suction hose (14) of the suction pump. The mechanism (40) comprises a valve device by whose means the air flow (S) can be switched on to act upon the suction nozzle (30) of the mechanism (40). By means of the suction nozzle (30), liquids and solid particles (SP) are sucked out of the patient's mouth. The closing mechanism is placed on support of an opening (10a) or slot in its holder (10) when the suction device is not in use. The closing mechanism (40) comprises parts (41,43, 46,50,51) permanently fixed to the suction hose (14) and parts (42,44,45) that can move in relation to said fixed parts. A spring (48) or springs is/are fitted between said mobile and fixed parts, said spring/springs keeping the closing mechanism (40) in a stable open position (Fig. 3A) when the closing mechanism is outside its holder (10). When the closing mechanism (40) is allowed to rest on support of its holder (10), the mobile parts (42,44,45) in the mechanism, being supported by a shoulder (10b) or equivalent in the holder, are displaced in relation to the fixed parts (41,43,46,50,53) of the mechanism, and a valve disk (40) or an equivalent closing piece, placed between the mobile and the fixed parts, closes the valve substantially by the effect of the weight of the suction hose (14) and of the fixed parts against the spring force (Fig. 3B).

EP 0 445 091 A1

Jouve, 18, rue Saint-Denis, 75001 PARIS

FIG. 3B

# CLOSING MECHANISM FOR THE SUCTION DEVICE OF A DENTAL CARE MACHINE

The invention concerns a closing mechanism for the suction device used in connection with a dentist's treatment machine, said mechanism being connected to the suction hose connected to the suction pump, and said mechanism comprising a valve device by whose means the air flow, produced by negative pressure and effective through the suction hose, can be switched on to act upon the suction nozzle connected to the mechanism, by means of which suction nozzle liquids and solid particles are sucked out of the patient's mouth, and by means of which valve device the air flow can be closed, said closing mechanism being supposed to be placed on support of an opening or slot in its holder when the suction device is not in use, and said closing device comprising parts that confine a flow duct in their interior.

In prior art, various closing mechanisms for the suction devices of dental care machines are known. In prior-art dental care machines, suction hoses are used at one of whose ends there is a closing piece which is provided with a suction nozzle pipe and which is kept in the hand, the other end of the hose being connected to a filter. On the other hand, said filter is connected to a suction pump and to a unit for removal of liquids. By means of said suction pipe, saliva, water and solid particles, such as pieces of tooth or amalgam, are sucked out of the patient's mouth. The solid particles remain on the filter in said filter unit, whereas the liquids and the air pass through the filter.

In prior art, in dental care machines, such closing mechanisms are used in which the valve device is placed stationarily in connection with the suction system in the central unit of the treatment machine. As a rule, these prior-art valve devices include a diaphragm valve which operates by means of a magnetic valve, a mechanical valve, or equivalent. The magnetic valve is controlled by a microswitch or by an equivalent sensor member, for example, so that, when the nozzle piece placed at the end of the suction hose is placed in its holder, the microswitch or the equivalent sensing member gives an impulse and the magnetic valve closes/opens the suction. The construction of such an arrangement is complicated, and the diaphragm valves are susceptible of being broken down, for example, by the effect of sharp solid particles, such as chips of tooth and pieces of amalgam.

In respect of the prior art related to the present invention, reference is made, by way of example, to the US Patents 4,522,592, 4,589,869, 4,799,885, and 4,861,266 as well as to the EP Patent 254,687 (corresp. US Pat. 4,787,846). In the above patents, such closing mechanisms of the sort concerned are described as are placed at the end of the suction hose to be operated directly, without remote-control. By means of these closing devices, the suction can be switched on to be effective immediately, but, as a rule, their operation is inconvenient and their construction is complicated.

The prior-art closing mechanisms for suction hoses have involved several drawbacks, which have justified the present invention. Drawback related to the operation of the device include the particular operations required by the opening and closing of the closing mechanism, said operations making the work of the dentist and/or of the dentist's assistant slower and more difficult.

The EP Patent 254,687 mentioned above, which is, among the prior art referred to above, most closely related to the present invention, however, requires that the closing-member piece is placed in its stand carefully in a certain position, which makes the work slower and may cause disturbance in operation and loss of energy if the closing member remains open. Drawbacks related to the construction of the closing mechanism include complicated construction and susceptibility of blocking and other disturbance of operation resulting from solid particles. In said EP patent, the mechanism is closed by rotation, in which case solid particles that remain between the plane parts that are supposed to be closed may prevent complete closing or cause jamming of the valve or leakages of air.

The object of the present invention is to provide a closing mechanism of simple construction which is reliable in operation and quick and easy to operate for the dentist and/or for the dentist's assistant. An object of the invention is to provide a closing mechanism of the sort concerned in which no remote control or related microswitches and magnetic valves are required.

An object of the invention is to provide a closing mechanism of the sort concerned which has two stable positions automatically controlled by the stages of operation of the mechanism, i.e. an open position and a closed position.

A further object of the invention is to provide a closing mechanism of the sort concerned that is not susceptible of being blocked or of disturbance of operation resulting from such blocking.

A non-indispensable additional object of the invention is to provide a device whose noise level is moderate.

In view of achieving the objectives stated above and those that will come out later, the invention is mainly characterized in that the closing mechanism comprises parts permanently fixed to the suction hose and parts that can move in relation to said fixed parts and that a spring or springs is/are fitted between said mobile and fixed parts, said spring/springs keeping the closing mechanism in a stable open position when the closing mechanism is outside its holder and that, when the closing mechanism is allowed to rest on support of its holder, the mobile parts in the mechanism, being supported by a shoulder or equivalent in the holder, are displaced in relation to the fixed parts of the mechanism, and a valve disk or equivalent closing piece, which is placed between the mobile parts and the fixed parts, closes the valve substantially by the effect of the weight of the suction hose and of the fixed parts against the spring force.

In the following, the invention and its operational environment will be described in detail with reference to some exemplifying embodiments illustrated in the figures in the accompanying drawing, the invention being not confined to the details of said embodiments.

Figure 1 is an axonometric view of a dentist's treatment machine, in connection with which the invention is applied.

Figure 2 is a schematic illustration of the suction system related to the treatment machine, said system including a closing mechanism of the invention.

Figure 3A is a central axial sectional view of a closing mechanism in accordance with the invention in the open position.

Figure 3B shows the same as Fig. 3A while the closing mechanism is in its holder with the suction in the closed position.

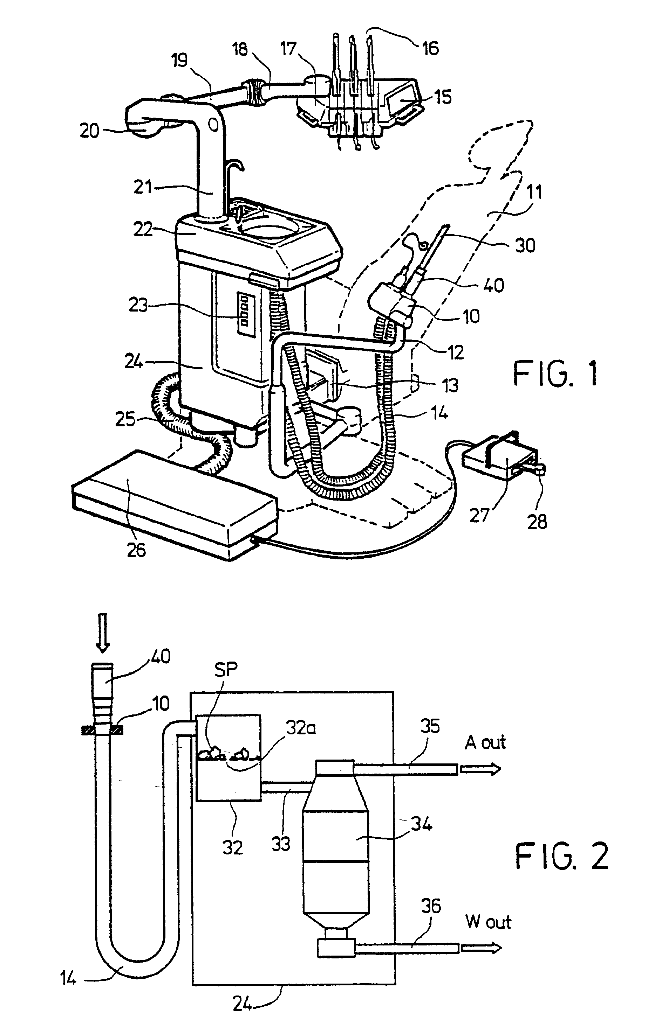

The dentist's treatment machine shown in Fig. 1 is mainly known in prior art, and only its principal features will be described to permit an understanding of its background and to give an overall idea.

The treatment machine shown in Fig. 1 comprises a central unit 24, which includes a control panel 23 for the operator and a basin part 22 above the control panel. A support arm 21 is attached to the top of the unit 24, said arm 21 being provided with an articulated arm 20. The articulated arm 20 is provided with a mobile arm 19, at whose end there is a console support 18. At the outer end of the support 18, the dentist's control panel 15 is fixed, which is provided with the instrument modules 16. The unit 24 is connected to the patient's chair 11 by the intermediate of a support frame 13. The holder 10 for the suction tubes 14 is connected to the unit 24 by means of an arm 12 with several elbows. The outer end of one of the suction tubes 14 is provided with a closing mechanism 40 in accordance with the invention, which is connected with a suction-nozzle pipe 30. The treatment machine is provided with a connection unit 26, which is connected to the unit 24 by the intermediate of a cable 25. The connection unit 26 is provided with a foot control box 27, which is provided with a foot control 28.

As is shown in Fig. 2, the central unit 24 of the treatment machine includes a filter system 32, on whose filter 32a the solid particles SP are collected. At the suction side of the filter 32a, the filter system 32 communicates with a separation tank 34 through a pipe 33, the bottom part of said tank being provided with an exhaust pipe 36 for the removal of liquids, which is illustrated by the arrow $W_{out}$. Above the separation tank 34, there is a pipe 35, which communicates with a suction pump (not shown) in the direction of the arrow $A_{out}$. It is also possible to use such prior-art systems in which the separation tank is not installed in the central unit, but elsewhere in the building in which the treatment machine is placed, and in such a case the separation tank usually semes for several treatment machines at the same time. To the top part of the filter system 32, a suction pipe 14 is connected, at whose end there is a closing mechanism 40 in accordance with the invention. By means of the nozzle pipe 30 connected to the suction duct of the closing mechanism 40, air, saliva, water, and solid particles are sucked out of the patient's mouth. The solid particles are, for example, pieces of tooth and amalgam, which had, in prior art, caused breakdowns of the diaphragm in diaphragm valves.

The closing mechanism 40 is a substantially cylindrical piece, which fits in the operator's hand, and the main features of its operation are as follows. When the operator grasps the mechanism 40 in his hand and lifts it out of the slot or opening 10a in the holder 10, the closing mechanism 40 is opened, so that the negative pressure in the suction pump produces an air flow, which starts flowing in the direction of the arrows S shown in Fig. 3A through the suction nozzle 30, whereby the device can be used. After liquids and, along with them, solid particles SP have been sucked out of the patient's mouth through the suction nozzle 30, the operator of the mechanism 40 may release his hold of the mechanism free of care, whereby the mechanism is returned automatically to its place by the effect of the weight of the suction hose 14, and at the same time the closing mechanism 40 is closed automatically because of its construction in accordance with the invention, which will be described below.

In the following, with reference to Figs. 3A and 3B, the detailed construction of the closing mechanism in accordance with the invention and the details of the operation will be described. Fig. 3A illustrates the closing mechanism in the open position, in which it is out of contact with its holder 10, i.e. normally in the operator's hand. In Fig. 3B, the closing mechanism is in the closed position, in which case it is in the wide opening 10b in the holder stably, by the effect of the weights of the hose 14 and of the fixed parts in the mechanism 40, resting on the shoulder 10b. The closing mechanism 40 comprises substantially cylindrical parts, which are circularly symmetric in relation to the central axis K-K. The closing mechanism is provided with a connector piece 41, by whose means the mechanism is connected to the outer end of the suction hose 14. A frame piece 43 is fixed to the inside of the connector piece 41, and an inner frame piece 46 is fixed to the outer end of said frame piece 43. At the inner end of the frame piece 46 there is a valve disk 50, which is connected with the frame piece 46 by the intermediate of narrow portions 51, between which there are suction openings 47a.

The parts 41,43,46,50 and 51 of the mechanism form an integral unit permanently attached to the suction hose 14. On the connector piece 41 there is a mobile annular part 42, whose upper end can move in the groove 43a in the part 43. The top side of the annular part 42 i connected with a series of pins 44 (e.g. 2 pcs.), which are passed displaceably through openings in the part 43. A spiral spring 48 is placed against the upper shoulder 45b of a mobile inner ring 45, the opposite end of said spring 48 being placed against the lower shoulder 46a of the piece 46.

In the following, with reference to Figs. 3A and 3B, the operation of the closing mechanism 40 described above will be described in more detail. When the mechanism 40 is placed apart from the wide opening 10a in its holder 10, the spring 48 keeps the mechanism 40 in the open position, in which position an air flow S can flow through the annular flow area between the valve disk 50 and the conical narrowing part 45k of the part 45, which air flow S carries liquids and solid particles along with it. The suction flow S passes through the opening 47 in the piece 46 through the openings 47a between the narrow portions 51 beyond the conical part 45k in the direction of the arrows through the opening 52 in the part 45 and further through the opening 53 in the part 41 into the suction hose 14.

When the suction device is no longer used, the operator releases his grasp of it, whereby the weight of the suction hose 14 pulls the hose 14 through the wide opening 10a in the holder, whereby, at the final stage of the return movement of the hose 14, the shoulder 10b of the opening 10a meets the edge of the outer ring 42. Thereby the ring 42 presses the inner part 45 upwards by the intermediate of the pins 44. The spring 48 force is dimensioned so that the weight of the hose 14 and of the fixed parts is enough to overcome its spring force, whereby the valve disk 50 is pressed against the conical part 45k in the part 45. It is a characteristic feature of this stage of the operation of the mechanism 40 that, at the final stage of closing, the negative pressure in the hose 14 pulls the valve disk 50 reliably into the ultimate closed position, whereby a stable closure is formed at C. Besides by the force of gravity, the closure is partly also maintained by the negative pressure present in the duct 52. The valve disk 50 may be provided with an elastic seal ring.

As comes out above, the closing mechanism 40 in accordance with the invention is characterized by simple construction, easy operation, and reliability in operation, the latter feature being contributed to by the stable two positions of the valve mechanism 40, i.e. the stable open position provided by means of the spring 48, and the closed position provided by the force of gravity and secured by the suction. Compared with electronics, the mechanism 40 can be considered as a sort of a bi-stable (flip-flop) device.

Above and in the following patent claims, when fixed parts and mobile parts of the mechanism 40 are spoken of, the fixed parts are expressly understood as parts permanently attached to the suction hose 14, and the mobile parts are understood as parts that can move in relation to said fixed parts. The above circumstance should be emphasized in particular because, when the closing mechanism 40 is placed in support of its holder 10, said mobile parts are supported on the holder 10 as immobile, whereas the fixed parts, together with the suction hose 14, are shifted axially downwards by the effect of the force of gravity and finally as aided by the outside atmospheric pressure, whereby the mechanism 40 is closed reliably.

It should be emphasized further that the closing mechanism in accordance with the invention is opened and closed by means of a linear movement in the direction of the longitudinal axis of the suction hose without any movement of rotation. It is partly owing to this that the construction can be made simple and reliable.

In the following, the patent claims will be given, and the various details of the invention may show variation within the scope of the inventive idea defined in said claims and differ from the details given above by way of example only.

## Claims

1.  Closing mechanism (40) for the suction device used in connection with a dentist's treatment machine, said mechanism being connected to the suction hose ( 14) connected to the suction pump, and said mechanism (40) comprising a valve device by whose means the air flow (S), produced by negative pressure and effective through the suction hose ( 14), can be switched on to act upon the suction nozzle (30) connected to the mechanism (40), by means of which suction nozzle liquids and solid particles (SP) are sucked out of the patient's mouth, and by means of which valve device the air flow (S) can be closed, said closing mechanism being supposed to be placed on support of an opening (10a) or slot in its holder (10) when the suction device is not in use, and said closing device comprising parts (41,42,43,45,46) that confine a flow duct (47,47a,52,53) in their interior, **characterized** in that the closing mechanism (40) comprises parts (41,43,46,50,51) permanently fixed to the suction hose (14) and parts (42,44,45) that can move in relation to said fixed parts and that a spring (48) or springs is/are fitted between said mobile and fixed parts, said spring/ springs keeping the closing mechanism (40) in a stable open position (Fig. 3A) when the closing mechanism is outside its holder (10) and that, when the closing mechanism (40) is allowed to rest on support of its holder (10), the mobile parts (42,44,45) in the mechanism, being supported by a shoulder (10b) or equivalent in the holder, are displaced in relation to the fixed parts (41,43, 46,50,53) of the mechanism, and a valve disk (40) or equivalent closing piece, which is placed between the mobile parts and the fixed parts, closes the valve substantially by the effect of the weight of the suction hose ( 14) and of the fixed parts against the spring force (Fig. 3B).

2. Closing mechanism as claimed in claim 1, **characterized** in that the mechanism is composed of substantially cylindrical parts which are circularly symmetric in relation to the central axis (K-K) and which are placed at least partly one inside the other, and that said central axis (K-K) is placed substantially vertically when the closing mechanism (40) is placed on support of its holder ( 10), the mechanism being then in the closed position (Fig. 3B).

3. Closing mechanism as claimed in claim 1 or 2, **characterized** in that the mechanism (40) comprises a cylindrical connector part (41), to which the end of the suction hose (14) is attached, a fixed cylinder part (43) attached to the outer end of said connector part (41), and a mobile annular part (42) attached around said connector part (41), said annular part (42) supporting the other mobile parts (44,45) when the outer edge of said annular part is in contact with a shoulder (10b) or any other stop face in the holder (10) of the closing mechanism (40).

4. Closing mechanism as claimed in claim 3, **characterized** in that a series of pins (44) have been attached to the upper end of said mobile annular part (42), which pins, when extending through openings in the outer ring part (45), act upon the mobile inner ring part (45), whose outer end (45b) is acted upon by a spiral spring (48), whose opposite end acts upon a lower shoulder (46a) of the stationary ring part.

5. Closing mechanism as claimed in any of the claims 1 to 4, **characterized** in that said mobile inner ring part (45) is provided with a conical closing part (45k), in whose interior there is a valve disk (50) or an equivalent closing member, which is, by the intermediate of narrow portions (51) placed between flow openings (47a), attached to the stationary ring part (46), which is again attached to the stationary outer ring part (43).

6. Closing mechanism as claimed in any of the claims 1 to 5, **characterized** in that inside the mechanism, a flow duct is defined, which is composed of a cylindrical suction duct (47) placed inside the stationary outer ring part (46), a suction nozzle (30) being connectable to said suction duct, of suction openings (47a) constituting an extension of said suction duct (47), narrow portions (51) being provided between said suction openings (47a) to fix the valve disk (50) in its position, of an annular space opening into said suction opening (47a), and thereafter, in the direction of suction flow, of a closing part (45k) which is conical in the flow direction and which is placed at the level of the valve disk (50), said closing part (45k) being defined by the moving ring part (45), and of a duct (52) placed inside the cylindrical ring part located at the inner end of said ring part (45), as well as of a suction duct (43) placed inside the connector part (41) and communicating with the interior of the hose (14).

FIG. 1

FIG. 2

FIG. 3A          FIG. 3B

European Patent
Office

**EUROPEAN SEARCH REPORT**

Application Number

EP 91 85 0013

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,X | EP-A-0 254 687 (CATTANI) <br> * Whole document * <br> --- | 1-4 | A 61 C 17/06 |
| A | EP-A-0 152 390 (MEDIPLAST) <br> * Claim 1; figures 1,2 * <br> ----- | 1-3,5,6 | |

TECHNICAL FIELDS
SEARCHED (Int. Cl.5)

A 61 C
A 61 G

The present search report has been drawn up for all claims

| Place of search | Date of completion of the search | Examiner |
|---|---|---|
| THE HAGUE | 19-03-1991 | KOUSOURETAS I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................

& : member of the same patent family, corresponding document

EPO FORM 1503 03.82 (P0401)